# EUROPEAN PATENT SPECIFICATION

(11) **EP 3 461 725 B1**
(45) Date of publication and mention of the grant of the patent: **27.05.2020**
(21) Application number: 18190156.2
(22) Date of filing: 22.08.2018
(51) Int. Cl.: B62J 1/12, B60N 2/56

(54) **SEAT STRUCTURE FOR SADDLE RIDING VEHICLE**
SITZSTRUKTUR FÜR EIN SATTELFAHRZEUG
STRUCTURE DE SIÈGE POUR VÉHICULE À ENFOURCHER

(30) Priority: 28.09.2017 JP 2017188580
(43) Date of publication of application: 03.04.2019
(73) Proprietor: Honda Motor Co., Ltd., Tokyo 107-8556 (JP)
(72) Inventor: Miyakawa, Futoshi, Saitama, 351-0193 (JP); Konishi, Katsuyuki, Saitama, 351-0193 (JP); Kadowaki, Yasuyuki, Saitama, 351-0193 (JP); Nagahata, Yohei, Saitama, 351-0193 (JP); Sasaki, Shohei, Saitama, 351-0193 (JP); Mishiro, Jumpei, Saitama, 351-0193 (JP)
(74) Representative: Beder, Jens

(56) References cited:
- EP-A2- 1 564 390
- US-A1- 2003 000 755
- US-A1- 2003 025 363
- US-A1- 2005 121 952
- US-A1- 2006 279 113

## Description

The present invention relates to a seat structure for a saddle riding vehicle.

A known saddle riding vehicle includes a rider's seat, a cowl disposed posterior to the rider's seat for covering a vehicle body, a cushion seat disposed on an upper portion of the cowl, and a groove through which air flows and which is formed between the cowl and the cushion seat. In the saddle riding vehicle, the cushion seat has an intake port through which air is drawn in and an exhaust port through which the air that has drawn in through the intake port is discharged toward the rear of the vehicle (see, for example, Japanese Patent No. 6023542).

A known approach is to use a cushion seat in order to prevent stuffiness of the seat. Unfortunately, the seat cushion temperature depends on, for example, outside temperature and thus defies adjustments, impairing comfort.

US 2003/0000755 A1 discloses an air management system for managing cooling air and engine air in a motorcycle, in which an air channel extending through a body of the motorcycle delivers cooling air to a radiator that is disposed beneath the motorcycle seat.

US 2003/0025363 A1 discloses a bicycle saddle with air ventilation. The air is distributed under the saddle via a channel. The air distribution channel is engaged with one or more discharge openings disposed within the vent recess so that while the bicycle moves forwardly, air flows through the air distribution channel.

It is an object of the present invention to provide a seat structure for a saddle riding vehicle, capable of making the seat cushion comfortable.

This object is achieved by a a seat structure according to the enclosed independent claim 1. Advantageous features of the present invention are defined in the corresponding subclaims.

In the aspect of the present invention, the seat structure includes the pipe that opens anteriorly with respect to the mesh seat and extends toward the mesh seat. The pipe extends so as to overlap at least one of the main frames toward the at least one opening in the seat bottom plate. Thus, outside air can be sent to the seat bottom plate of the mesh seat through the pipe and to the mesh seat by way of the at least one openings, so that the seat cushion temperature of the mesh seat can be maintained at a comfortable level. Additionally, the use of the outside air eliminates the need for, for example, a separate heater or coolant, thus achieving reduction in the number of parts used.

Preferably, the seat structure further includes the ram duct through which the outside air is drawn in and the pipe has the front ends connected with the ram duct. This configuration allows the outside air drawn in through the ram duct to be sent to the seat bottom plate of the mesh seat through the pipe and to the mesh seat by way of the at least one opening, so that the seat cushion temperature of the mesh seat can be maintained at a comfortable level. Additionally, the use of the outside air eliminates the need for, for example, a separate heater or coolant, thus achieving reduction in the number of parts used.

In addition, the pipe includes the flow rate adjustment mechanism for adjusting the flow rate of air flowing through the pipe. The adjusting switch of the flow rate adjustment mechanism is to be disposed at the handlebar. This configuration allows a rider to operate the adjusting switch as necessary to thereby adjust the flow rate of air flowing through the pipe using the flow rate adjustment mechanism. Thus, the rider can adjust an amount of air to be sent to the mesh seat to thereby adjust the seat cushion temperature, so that the seat cushion temperature of the mesh seat can be maintained at a comfortable level.

Additionally, the at least one opening in the seat bottom plate may be provided in plurality. This arrangement allows the air that has been sent to the seat bottom plate of the mesh seat through the pipe to be sent to the mesh seat via the openings, so that the seat cushion temperature of the mesh seat can be maintained at a comfortable level.
Fig. 1 is a left side elevational view of a motorcycle to which a first embodiment of the present invention is applied.
Fig. 2 is an enlarged view of a condition in which a cowl shown in Fig. 1 has been removed.
Fig. 3 is a cross-sectional view of a mesh seat.
Fig. 4 is a schematic plan view of the mesh seat.
Fig. 5 is a diagram illustrating conditions for an experiment that measures a seat cushion temperature when air is blown from an opening in the mesh seat.
Fig. 6 is a graph showing results of the experiment that measures the seat cushion temperature when air is blown from the opening in the mesh seat.

A specific embodiment to which the present invention is applied will be described below with reference to the accompanying drawings. Throughout the descriptions given hereunder, expressions indicating directions including front and rear, right and left, and upper and lower mean the same directions as those in a vehicle body unless otherwise specified. In the drawings, an arrow FR indicates an anterior direction of the vehicle body, an arrow UP indicates a superior direction of the vehicle body, and an arrow LH indicates a leftward direction of the vehicle body.

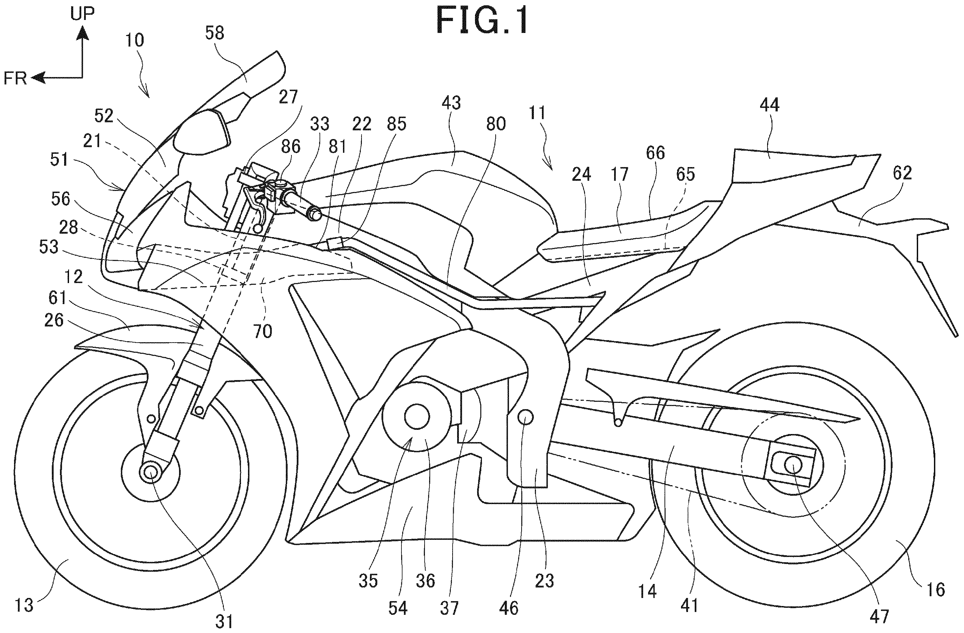

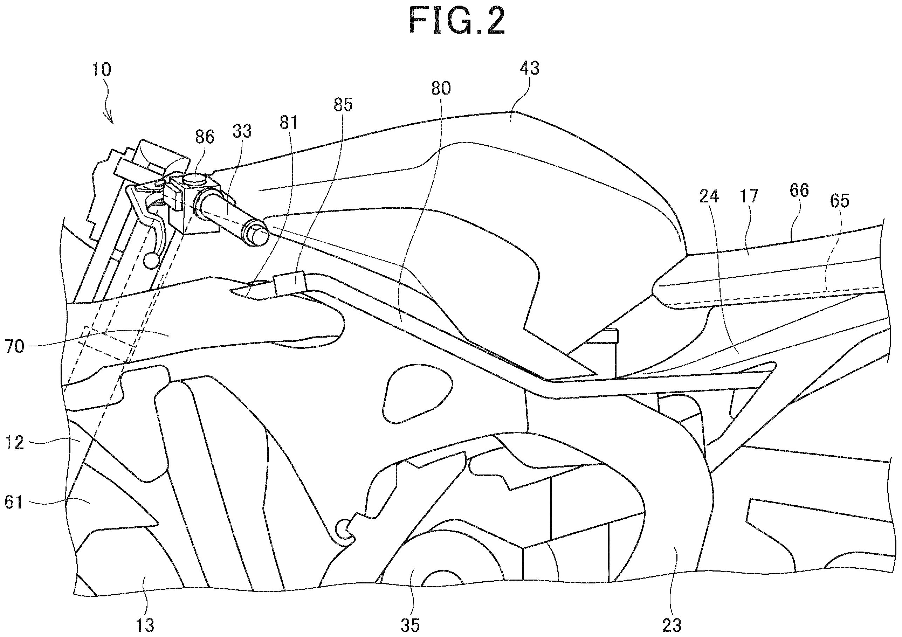

Fig. 1 is a left side elevational view of a motorcycle 10 to which a seat structure for a saddle riding vehicle according to an embodiment of the present invention is applied. Fig. 2 is an enlarged view of a condition in which a cowl shown in Fig. 1 has been removed.

The motorcycle 10 includes a front wheel 13, a rear wheel 16, and a mesh seat 17. The front wheel 13 is steerably supported at a front end portion of a vehicle body frame 11 via a front fork 12. The rear wheel 16 is oscillatably supported at a lower portion of the vehicle body frame 11 via a swing arm 14. The mesh seat 17 is disposed at an upper portion of the vehicle body frame 11. The motorcycle 10 is a saddle riding vehicle in which a rider straddles the mesh seat 17.

The vehicle body frame 11 includes a head pipe 21, a pair of left and right main frames 22, a pair of left and right center frames 23, and a pair of left and right seat frames 24.

The head pipe 21 constitutes the front end portion of the vehicle body frame 11. The left and right main frames 22 extend from the head pipe 21 obliquely downwardly toward the rear. The left and right center frames 23 extend from rear ends of the respective main frames 22 downwardly. The left and right seat frames 24 extend from the respective main frames 22 obliquely upwardly toward the rear to thereby support the mesh seat 17.

The front fork 12 includes a pair of left and right fork tubes 26, a top bridge 27, and a bottom bridge 28.

The left and right fork tubes 26 are a telescopic shock absorber. The front wheel 13 is supported via an axle 31 at lower end portions of the left and right fork tubes 26. The top bridge 27 and the bottom bridge 28 connect upper portions of the left and right fork tubes 26. A stem pipe (not shown) extending vertically is disposed across the top bridge 27 and the bottom bridge 28. The stem pipe is rotatably supported by the head pipe 21.

A pair of left and right handlebars 33 is mounted on the top bridge 27. The handlebars 33 permit height adjustment.

An engine 35 is supported on the left and right main frames 22 and the left and right center frames 23. The engine 35 includes a crankcase 36. A transmission 37 is integrated with the crankcase 36. An output from the transmission 37 is transmitted to the rear wheel 16 via a chain 41.

A fuel tank 43 is mounted on upper portions of the left and right main frames 22. The fuel tank 43 is disposed anterior to the mesh seat 17. A pillion seat 44 is disposed posterior to the mesh seat 17.

The swing arm 14 has a front end portion oscillatably supported by a pivot shaft 46 disposed across the left and right center frames 23. The swing arm 14 has a rear end portion supporting the rear wheel 16 via an axle 47.

The motorcycle 10 has a front portion and a lower portion covered in a cowling 51. The cowling 51 includes an upper cowl 52, a middle cowl 53, and a lower cowl 54.

The upper cowl 52 covers an area around a headlight 56. A windscreen 58 is disposed at a center of an upper portion of the upper cowl 52. Part of the upper cowl 52 is variable in height to follow a height of the left and right handlebars 33 being adjusted.

The middle cowl 53 extends toward the rear and downwardly from positions close to portions of the upper cowl 52 outside in a vehicle width direction, to thereby cover a front portion of the vehicle body from both lateral sides. The lower cowl 54 covers a lower portion of the vehicle body including the engine 35.

The front wheel 13 is covered in a front fender 61 from above. The rear wheel 16 is covered in a rear fender 62 from above.

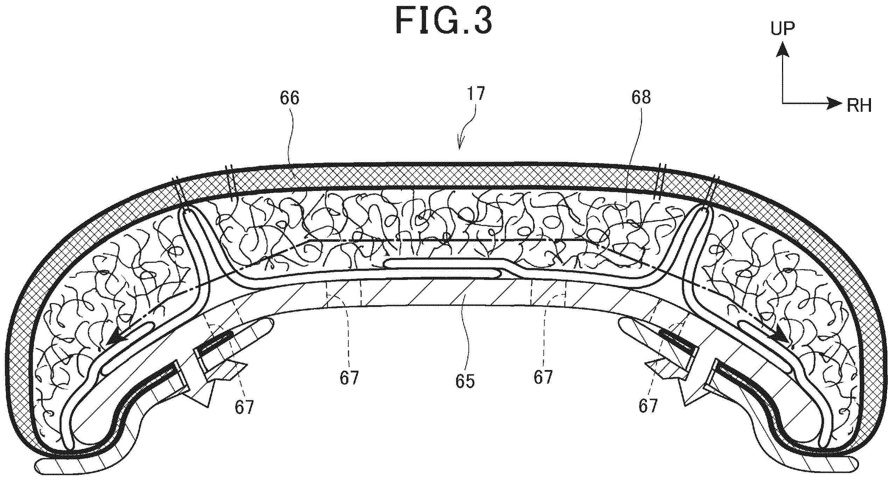

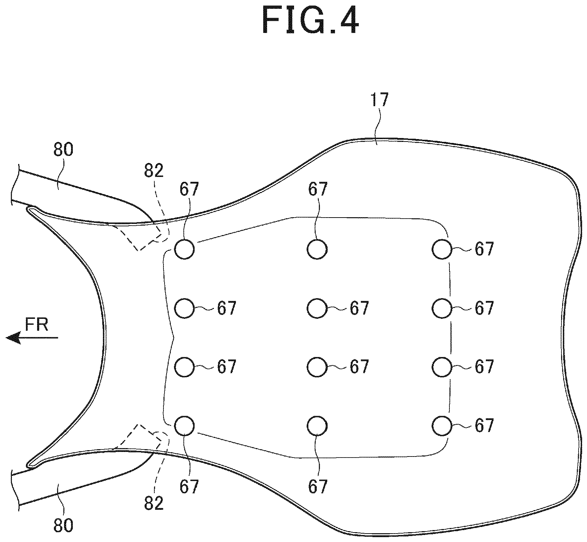

Fig. 3 is a cross-sectional view of the mesh seat 17. Fig. 4 is a schematic plan view of the mesh seat 17.

Reference is made to Fig. 3. The mesh seat 17 includes a seat bottom plate 65 and a seat cover 66. The seat cover 66 is disposed on an upper surface side of the seat bottom plate 65. A cushion material 68 is filled in a space between the seat bottom plate 65 and the seat cover 66. The seat cover 66 is formed of, for example, a knitted fabric knitted from a fiber material formed of a synthetic resin. The fabric has a mesh perforated texture offering breathability.

The cushion material 68 is a three-dimensional mesh-shaped structure that includes thermoplastic elastomer or other synthetic resin fibers (also referred to as continuous streak materials) bent into loops. The loops have contact portions joined to each other by fusion. A larger regular size of the cushion material 68 is cut into a required shape to suit each member of the cushion material 68.

Specifically, the cushion material 68 is formed from a thermoplastic elastomer mesh-shaped member. This configuration achieves a cushion that offers favorable cushioning property, durability, and breathability. The cushion offers outstanding breathability, in particular, compared with known vehicle cushions formed of urethane.

Reference is made to Fig. 4. In the embodiment, the seat bottom plate 65 has a plurality of openings 67. A total of twelve openings 67 are formed in the mesh seat 17. The twelve openings 67 are arrayed in three rows at a front portion, a middle portion, and a rear portion of the mesh seat 17. Each row includes two openings on either lateral side with respect to a center of the mesh seat 17.

The arrangement in the embodiment having a total of twelve openings 67 in one mesh seat 17 is illustrative only and not limiting and the openings 67 may be formed in any number. Additionally, the openings 67 may be formed at any locations.

The middle cowl 53 includes a ram duct 70 formed therein. The ram duct 70 opens in the front of the middle cowl 53. The ram duct 70 allows outside air to be drawn and sent into the main frames 22, thereby supplying an intake system of the engine 35 with air.

A pipe 80 extends along each of upper portions of the main frames 22. The pipe 80 has a front end constituting an intake port 81 connected with the ram duct 70. The pipe 80 has a rear end constituting an outlet port 82. The outlet port 82 opens toward the seat bottom plate 65 of the mesh seat 17. Specifically, two pipes 80 are disposed on either lateral side of the main frames 22.

The foregoing arrangements result in the outside air drawn in through the ram duct 70 being sent to the inside of the main frames 22 and part of the outside air flowing into the pipes 80 and being sent to the seat bottom plate 65 of the mesh seat 17 by way of the outlet ports 82.

Another possible arrangement is to directly connect the outlet port 82 of the pipe 80 to the opening 67 and seal the connection, in addition to causing the outlet port 82 to open toward the seat bottom plate 65.

A flow rate adjustment mechanism 85 is disposed near the connection of the pipe 80 with the ram duct 70. The flow rate adjustment mechanism 85 is configured, for example, as an electrically driven valve mechanism that can vary the opening angle of the intake port 81 in the pipe 80. The flow rate adjustment mechanism 85 includes an adjusting switch 86. The adjusting switch 86 can adjust the opening angle and is disposed at the handlebar 33.

The foregoing arrangements allow the rider to operate the adjusting switch 86 to thereby vary the opening angle of the flow rate adjustment mechanism 85.

Effects of the embodiment will be described below.

When the saddle riding vehicle is driven, outside air is drawn in through the ram duct 70 of the middle cowl 53 and the outside air flows into the pipe 80 via the intake port 81 of the pipe 80 before being blown from the outlet port 82 of the pipe 80 toward the seat bottom plate 65 of the mesh seat 17.

Because the mesh seat 17 has breathability, the air blown against the seat bottom plate 65 flows toward a front surface of the mesh seat 17 by way of the openings 67 in the seat bottom plate 65.

Thus, a temperature of a seat cushion of the mesh seat 17 can be maintained at a predetermined level through the flow of air described above.

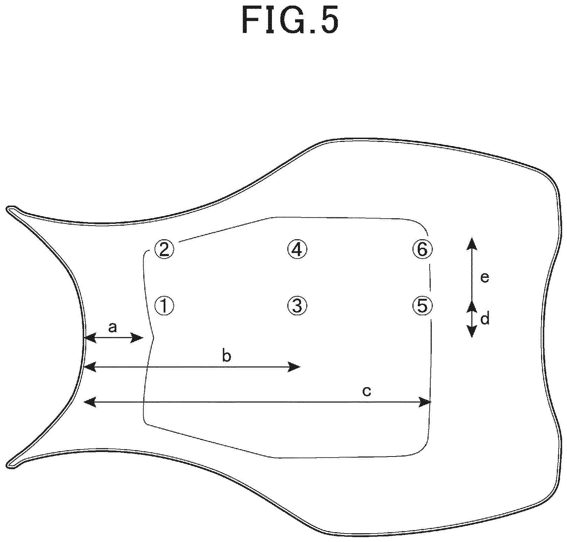

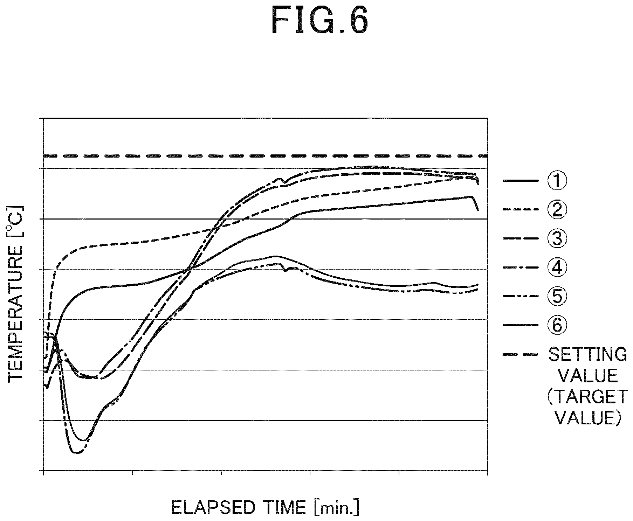

Fig. 5 is a diagram illustrating conditions for an experiment that measures the seat cushion temperature when air is blown from the openings 67 in the mesh seat 17. Fig. 6 is a graph showing results of the experiment that measures the seat cushion temperature when air is blown from the openings 67 in the mesh seat 17.

Reference is made to Fig. 5. In the experiment, measurement points 1 to 6 were established. Measurement points 1 to 6 represent positions with varying distances toward the rear from a front end of the mesh seat 17 and in the width direction from a center of the mesh seat 17: specifically, anterior positions a, middle positions b, and posterior positions c; and positions with a distance d from the center and with a distance e from the center. The measurement points 1 to 6 correspond to the respective openings 67 in the mesh seat 17. The seat cushion temperatures were then measured on the motorcycle 10 set in a wind tunnel.

Reference is made to Fig. 6. The results of measurement of the seat cushion temperatures show the following. Specifically, noted at measurement points 1 and 2 was a trend that the seat cushion temperatures increase since the start of the experiment; noted at measurement points 3 and 4 was a trend that the seat cushion temperatures increase slightly since the start of the experiment and then decrease before starting to increase again; and noted at measurement points 5 and 6 was a trend that the seat cushion temperatures decrease sharply since the start of the experiment and then increase.

Specifically, at any of measurement points 1 to 6, the trend was noted that the seat cushion temperatures increase so as to approach a setting value (target value) as time elapses.

The experiment reveals that the seat cushion temperatures of the mesh seat 17 approach the setting value (target value) within a relatively short period of time, suggesting that comfort is improved.

As described above, the seat structure in the embodiment includes the mesh seat 17. The seat bottom plate 65 in contact with the lower end of the mesh seat 17 has the openings 67. The pipes 80 open anteriorly with respect to the mesh seat 17 and extend toward the mesh seat 17. The pipes 80 extend so as to overlap the main frames 22 toward the openings 67 in the seat bottom plate 65.

The foregoing arrangements allow outside air to be sent to the seat bottom plate 65 of the mesh seat 17 through the pipes 80 and to the mesh seat 17 by way of the openings 67, so that the seat cushion temperature of the mesh seat 17 can be maintained at a comfortable level. Additionally, the use of the outside air eliminates the need for, for example, a separate heater or coolant, thus achieving reduction in the number of parts used.

The seat structure in the embodiment includes the ram duct 70 through which the outside air is drawn in. The pipes 80 have front ends connected with the ram duct 70.

The foregoing arrangements allow the outside air drawn in through the ram duct 70 to be sent to the seat bottom plate 65 of the mesh seat 17 through the pipes 80 and to the mesh seat 17 by way of the openings 67, so that the seat cushion temperature of the mesh seat 17 can be maintained at a comfortable level. Additionally, the use of the outside air eliminates the need for, for example, a separate heater or coolant, thus achieving reduction in the number of parts used.

In addition, the pipes 80 each include the flow rate adjustment mechanism 85 for adjusting a flow rate of air flowing through the pipe 80. The adjusting switch 86 of the flow rate adjustment mechanism 85 is disposed at the handlebar 33.

The foregoing arrangements allow the rider to operate the adjusting switch 86 as necessary to thereby adjust the flow rate of air flowing through the pipes 80 using the flow rate adjustment mechanism 85. Thus, the rider can adjust the amount of air to be sent to the mesh seat 17 to thereby adjust the seat cushion temperature, so that the seat cushion temperature of the mesh seat 17 can be maintained at a comfortable level.

Additionally, the seat bottom plate 65 has a plurality of openings 67 in the embodiment.

The foregoing arrangement allows the air that has been sent to the seat bottom plate 65 of the mesh seat 17 through the pipes 80 to be sent to the mesh seat 17 via the openings 67, so that the seat cushion temperature of the mesh seat 17 can be maintained at a comfortable level.

It is to be understood that the embodiment described above is for illustrative purposes only and that various modifications or changes in light thereof will be suggested to one skilled in the art without departing from the scope of the present invention.

For example, in the embodiment, the outside air is drawn in via the ram duct 70 to the pipes 80 and sent to the seat bottom plate 65 of the mesh seat 17. The intake ports 81 in the pipes 80 may nonetheless be disposed to be open toward the front of the motorcycle and the outside air may be directly drawn in to the pipes 80.

In addition, in the embodiment, the pipes 80 extend along the main frames 22. The pipe 80 may nonetheless be disposed to extend along the inside or the outside of the middle cowl 53. In this case, the pipe 80 may be disposed between an outer surface of the main frame 22 and an inner surface of the middle cowl 53.

In addition, in the embodiment, the outside air is drawn in to the pipes 80. Heat of a radiator of the motorcycle, for example, may be taken in to the pipes 80. In this case, a mechanism may be provided for changing between an outside air intake port using the ram duct 70 and a hot air intake port using the radiator, so that a selection can be made between the outside air from the ram duct 70 and the hot air from the radiator according to the season or the outside temperature.

In addition, in the embodiment, two pipes 80 are disposed. The number of pipe 80 is not limited to two. For example, one pipe 80 may be provided for one of the main frames 22.

The invention is applicable to, not only the motorcycle 10, but also types of saddle riding vehicles other than the motorcycle. The saddle riding vehicles include all types of vehicles in which the rider straddles the vehicle body, including three-wheel saddle riding vehicles and four-wheel saddle riding vehicles classified as all-terrain vehicles (ATVs) in addition to the motorcycles (including motor-assisted bicycles).
- 10: Motorcycle (saddle riding vehicle)
- 11: Vehicle body frame
- 17: Mesh seat
- 22: Main frame
- 33: Handlebar
- 65: Seat bottom plate
- 66: Seat cover
- 67: Opening
- 70: Ram duct
- 80: Pipe
- 81: Intake port
- 85: Flow rate adjustment mechanism
- 86: Adjusting switch

## Claims

1. A seat structure for a saddle riding vehicle, the saddle riding vehicle including a pair of main frames (22) and a rider's seat, the seat structure comprising:
a mesh seat (17) as the rider's seat, the mesh seat (17) including a seat bottom plate (65), the seat bottom plate (65) having at least one opening (67); and
a pipe (80) opening anteriorly with respect to the mesh seat (17) and extending toward the mesh seat (17), wherein
the pipe (80) extends so as to overlap at least one of the main frames (22) toward the at least one opening (67) in the seat bottom plate (65), in order to send outside air to the seat bottom plate (65) of the mesh seat (17) through the pipe (80) and to the mesh seat (17) by way of the at least one opening (67).

2. The seat structure for a saddle riding vehicle according to claim 1, further comprising:
a ram duct (70) through which outside air is drawn in, wherein
the pipe (80) has front ends connected with the ram duct (70).

3. The seat structure for a saddle riding vehicle according to claim 1 or 2, wherein
the pipe (80) includes a flow rate adjustment mechanism (85) that adjusts a flow rate of air flowing through the pipe (80), and
the flow rate adjustment mechanism (85) includes an adjusting switch (86) which is to be disposed in a handlebar (33).

4. The seat structure for a saddle riding vehicle according to any one of claims 1 to 3, wherein the at least one opening (67) in the seat bottom plate (65) is provided in plurality.

## Patentansprüche

1. Sitzkonstruktion für ein Sattelfahrzeug, wobei das Sattelfahrzeug ein Paar Hauptrahmen (22) und einen Fahrersitz aufweist, wobei die Sitzkonstruktion umfasst:
einen Gewebesitz (17) als Fahrersitz, wobei der Gewebesitz (17) eine Sitz-Grundplatte (65) aufweist, wobei die Sitz-Grundplatte (65) wenigstens eine Öffnung (67) hat; und ein Rohr (80), welches sich in Bezug auf den Gewebesitz (17) nach vorne öffnet und sich zu dem Gewebesitz (17) hin erstreckt, wobei
sich das Rohr (80) so erstreckt, dass es wenigstens einen Hauptrahmen (22) auf die wenigstens eine Öffnung (67) in der Sitz-Grundplatte (65) zu überlappt, um der Sitz-Grundplatte (65) des Gewebesitzes (17) Außenluft über das Rohr (80) und dem Gewebesitz (17) über die wenigstens eine Öffnung (67) zuzusenden.

2. Sitzkonstruktion für ein Sattelfahrzeug gemäß Anspruch 1, weiterhin umfassend:
einen Stauluftkanal (70), durch welchen Außenluft angesaugt wird, wobei das Rohr (80) ein vorderes Ende hat, dass mit dem Stauluftkanal (70) verbunden ist.

3. Sitzkonstruktion für ein Sattelfahrzeug gemäß Anspruch 1 oder 2, wobei das Rohr (80) einen Durchfluss-Einstellmechanismus (85) aufweist, der einen Durchfluss von Luft einstellt, der durch das Rohr (80) strömt, und
der Durchfluss-Einstellmechanismus (85) einen Einstellschalter (86) aufweist, der an dem Lenker (33) angeordnet ist.

4. Sitzkonstruktion für ein Sattelfahrzeug gemäß irgendeinem der Ansprüche 1 bis 3, wobei die wenigstens eine Öffnung (67) in der Sitz-Grundplatte (65) mehrfach vorgesehen ist.

## Revendications

1. Structure de selle pour un véhicule à selle, le véhicule à selle comprenant une paire de bâtis principaux (22) et une selle de conducteur, la structure de selle comprenant :
une selle en maille (17) en tant que selle de conducteur, la selle en maille (17) comprenant une plaque inférieure de selle (65), la plaque inférieure de selle (65) ayant au moins une ouverture (67) ; et
un tuyau (80) s'ouvrant vers l'avant par rapport à la selle en maille (17) et s'étendant vers la selle en maille (17), dans laquelle :
le tuyau (80) s'étend afin de recouvrir au moins l'un des bâtis principaux (22) vers au moins une ouverture (67) dans la plaque inférieure de selle (65) afin d'envoyer l'air extérieur vers la plaque inférieure de selle (65) de la selle en maille (17) par le tuyau (80) et vers la selle en maille (17) au moyen de la au moins une ouverture (67).

2. Structure de selle pour un véhicule à selle selon la revendication 1, comprenant en outre :
un conduit d'air dynamique (70) à travers lequel l'air extérieur est aspiré, dans laquelle :
le tuyau (80) a des extrémités avant raccordées avec le conduit d'air dynamique (70).

3. Structure de selle pour un véhicule à selle selon la revendication 1 ou 2, dans laquelle :
le tuyau (80) comprend un mécanisme d'ajustement de débit (85) qui ajuste un débit d'air s'écoulant à travers le tuyau (80), et
le mécanisme d'ajustement de débit (85) comprend un commutateur d'ajustement (86) qui doit être disposé dans un guidon (33).

4. Structure de selle pour un véhicule à selle selon l'une quelconque des revendications 1 à 3, dans laquelle la au moins une ouverture (67) dans la plaque inférieure de selle (65) est prévue en plusieurs exemplaires.
